# EUROPEAN PATENT APPLICATION

(11) **EP 4 826 327 A1**
(43) Date of publication of application: **21.10.2026**
(21) Application number: 25170294.0
(22) Date of filing: 14.04.2025
(51) Int. Cl.: G01B 9/02, G01B 9/02061, G01B 9/02055, G01B 11/24, G01B 21/04

(54) **INTERFEROMETRIC MEASURING DEVICE**

(71) Applicant: Taylor Hobson Ltd., Leicester LE4 9JD (GB)
(72) Inventor: DR. AM WEG, Christian, 64289 Darmstadt (DE); MAY, Thilo, 64287 Darmstadt (DE); ROSENDAHL, Dennis, 64331 Weiterstadt (DE)
(74) Representative: Weilnau, Carsten

(57) **Abstract**

The disclosure relates to an interferometric measuring device and to a respective measurement probe (10) for measuring a distance between a measurement point (24) on a surface (22) of an object (20) and a reference point (48) on a reference surface (44) of a reference body (42), the measurement probe (10) comprising:
- a first distance sensor (50) configured to direct a first measurement beam (12) onto the measurement point (24) on the surface (22) of the object (20) along a first direction (D1) and configured to capture a first reflected measurement beam portion (12') reflected from the surface (22),
- a second distance sensor (52) configured to direct a second measurement beam (26) onto the reference point (48) on the reference surface (44) along a second direction (D2) and configured to capture a second reflected measurement beam portion (26') reflected from the reference surface (44),
- wherein the measurement point (24) and the reference point (48) define a first virtual line (55) crossing the measurement point (24) and the reference point (48),
- a sensor mount (61) to mutually fix the first distance sensor (50) and the second distance sensor (52),
- wherein the sensor mount (61) comprises a recess (60), which is traversed by the first virtual line (55).

## Description

### Field

The present disclosure relates to the field of interferometric measuring devices, in particular to fiber-implemented interferometric measuring devices for measuring a surface, a distance and/or profile of an object by reflection of electromagnetic radiation from a surface of the object. In a further aspect the present disclosure also relates to a measurement probe for a measuring device, in particular to a measurement probe for an interferometric measuring device. In further aspects the present disclosure relates to a method of measuring a surface or profile of an object and to a computer program for conducting such a measurement.

### Background

Quality control and a precise measurement of optical surfaces of optical elements, such as lenses gains more and more importance, in particular for a mass-manufactured optical elements. This might particularly apply to rather small sized optical elements, that can be used for instance in miniaturized camera-, imaging- and/or display systems.

For instance, US 8 736 850 B2 discloses an apparatus for measurement of at least one surface section of an object mounted on a carrier. The apparatus comprises a reference object, which is fixable in relation to the carrier, and a holder that is movable in relation to the reference object in at least a first direction.

A reference body and a distance sensor, which are mounted in a rotational manner relative to one another are arranged on the holder. A distance measuring device is configured to determine a first distance to a first point on the surface of the object and to determine a second distance to a second point on the reference body corresponding with the first point on the object. For this, the distance measuring device comprises a first and a second distance sensor, one of which facing the object and the other of which facing the reference body. With such an apparatus, the surface of the object can be optically probed or scanned in a highly precise and contactless manner.

When measuring a surface or profile of an object by way of optical interferometry it is required to direct a measurement beam onto a measurement point on the surface of the object and to detect a portion of the measurement beam reflected from the measurement point. In order to have sufficient signal strength it is required or beneficial when the angle of incidence of the measurement beam on the surface of the object is almost orthogonal or is within a predefined acceptance angle or acceptance range.

When measuring a curved or aspheric surface of an object it may be required to reorient the direction of the measurement beam in accordance to the profile of the surface of the object in the region of the measurement point. With the above-described apparatus for measuring of at least one surface section of an object on a carrier, such a measurement can be conducted and provided with rather planar shaped surfaces, curved or aspheric surfaces of an object, such as a lens or a mirror.

However, the distance sensor cannot be used to measure an inside surface of a hollow object, such as an inside sidewall of a lens barrel, e.g., configured to mount or to hold at least one or a plurality of optical elements, such as lenses.

Here, and with a tubularly-shaped hollow surface or surface profile it would be required to orient the distance sensor into a radially outwardly directed orientation, which does not seem to be possible.

Moreover, the measurement principle as described above, e.g. in document US 8 736 850 B2 does not seem to be suitable for measuring inside surfaces of hollow object because the measurement principle requires to measure a first distance between a first distance sensor and the surface of the object and to measure a second distance to a reference surface of a reference body along an opposite direction. Measuring of the distances in two diametrically opposite directions doesn't seem to be applicable for measuring inside hollow structures of limited to diameter or cross-section because the dimensions of the two diametrically oppositely oriented distance sensors is simply too large.

It is therefore an object to provide improvements to an interferometric measurement device, which allows to precisely measure also inside facing surfaces or inside facing profiles of objects, and in particular of hollow objects, such as lenses barrels.

It is a further aim to provide both, a precise surface measurement of optical elements, such as lenses as well as to provide a highly precise measurement of inside facing surfaces of lenses barrels or the like objects or components.

### Summary

The above-mentioned drawbacks will be solved by a measurement probe, by a measuring device, by a method of measuring a distance between a measurement point on a surface of an object and a reference point on a reference surface of a reference body and by a computer program as defined by the features of the independent claims. Optional solutions are subject of the dependent claims.

In a first aspect there is provided a measurement probe for measuring a distance between a measurement point on a surface of an object and a reference point on a reference surface of a reference body or reference object. The measurement probe comprises a first distance sensor, which is configured to direct a first measurement beam onto the measurement point on the surface of the object along a first direction.

The first distance sensor is further configured or operable to capture a first reflected measurement beam portion, which is reflected from the surface. The measurement probe further comprises a second distance sensor, which is configured to direct a second measurement beam onto the reference point on the reference surface along a second direction. The second distance sensor is further configured to capture a second reflected measurement beam portion, which is reflected from the reference surface.

Moreover, the measurement point and the reference point define a first virtual line crossing the measurement point and the reference point. Hence, the virtual line is an artificial line, which is defined by the first measurement point and by the reference point towards which the first and second distance sensors direct respective first and second measurement beams.

Of course, the first virtual line is a straight line and is defined by the shortest distance between the measurement point on the surface and the reference point on the reference surface.

The measurement probe further comprises a sensor mount, to mutually fix the first distance sensor and the second distance sensor. The first distance sensor and the second distance sensor may be both fixed to the mount. The first distance sensor may be movable relative to the second distance sensor via the sensor mount.

Hence, the first distance sensor may be fixed to the sensor mount, also, the second distance sensor may be fixed to the sensor mount. This way, first and second distance sensors may be mutually fixed to each other via the sensor mount. The sensor mount may form or constitute a common base for the first distance sensor and for the second distance sensor, respectively.

The sensor mount is provided with or comprises a recess or a recessed portion, which is traversed by the first virtual line. Hence, the first virtual line may extend longitudinally or coaxial with the first direction and/or with the second direction and may traverse or extend through at least a portion of the first distance sensor and the second distance sensor.

According to some examples, the first direction and the second direction may be oriented parallel or may extend coaxial. Hence, the first direction and the second direction may be a common direction. Here, the first distance sensor may be located at a predefined offset from the second distance sensor. The first distance sensor may be configured to direct the first measurement beam onto the measurement point on the surface of the object along the second direction while the second distance sensor is configured to direct the second measurement beam onto the reference point on the reference surface along the second direction as well.

Generally, the first and the second distance sensors may be separated from each other along the first direction and/or along the second direction. The recess of the sensor mount may be located between the first distance sensor and the second distance sensor thus allowing to introduce or to insert at least a portion of the object into the recess or recessed portion of the sensor mount. With the first distance sensor directing the first measurement beam onto the surface of the object along the second direction there can be likewise captured a first reflected measurement beam portion reflected from the surface by the first distance sensor.

According to some examples, the first distance sensor and the second distance sensor may be oriented or aligned coaxially. According to some examples, the first direction is opposite the second direction. Accordingly, the first measurement beam may propagate in a direction opposite to the direction of the second measurement beam.

Moreover, the first and the second measurement beams may coincide or may substantially overlap with the virtual line, at least in the region of the measurement point and the reference point, respectively. In this way, it may be provided that any variations of a position of the sensor mount relative to the reference surface or reference body, which might be due to a rotation of the sensor mount and hence of the first and the second distance sensors relative to the reference surface or reference body, have a likewise or corresponding influence on the distance between the first distance sensor and the measurement point on the surface.

By way of the recess of the sensor mount it is now possible to receive at least a portion of the object between the first distance sensor and the second distance sensor. In this way, the first distance sensor may be easily introduced into a hollow structure of the object, such as into a hollow tubular structure of e.g., a length barrel. The recess may comprise a predefined depth as seen in a radial direction with respect to the first or second direction as an axial direction.

In other words, the recess may be located between the first distance sensor and the second distance sensor. The recess maybe open towards a lateral or radial direction with respect to one of the first and second directions as an axial or longitudinal direction. Such a configuration allows to introduce a portion of the object into the recessed so as to receive at least the first distance sensor inside the hollow structure of the object for measuring an inside surface of the hollow structure of the object.

In this way, for instance the first distance sensor may enter a hollow structure of the object and may be oriented towards an inside surface of the hollow object while maintaining an Abbe principle or Abbe condition according to which the measurement conducted by the first and the second distance sensors is coaxial or in-line with the line in which the displacement and hence a given length is to be measured on the object.

Insofar, the recess of the sensor mount enables to measure an inside surface of a hollow structure and to direct the first measurement beam onto such an inside surface while directing the second measurement beam onto a reference surface, which is located outside the hollow structure of the object. Here, a sidewall portion of a tubular structure of the object can be at least partially inserted into the recess along an insertion direction, which may extend at a predefined angle relative to at least one of the first direction at the second direction.

In some examples, the insert direction may extend perpendicular to the first direction and/or to the second direction along which the first and the second measurement beams propagate.

According to a further example the recess of the sensor mount comprises or defines an insert opening, which is configured to receive at least a portion of the object, e.g., a sidewall of the object. In this way, the first distance sensor may be inserted into the hollow structure of the object and may be thus directed towards or onto an inside surface of the hollow structure.

The insert direction, along which the portion of the object can be inserted into the recess of the sensor mount may extend at a predefined angle relative to at least one of the first direction and the second direction. It may extend perpendicular to the first direction and/or to the second direction. It may also extend at a predefined angle relative to a perpendicular direction with respect to the first direction or a second direction. Moreover, and according to further examples, the insert direction may deviate from a perpendicular orientation relative to at least one of the first direction and the second direction by a maximum angle of 45°, by a maximum angle of less than 30° or by a maximum angle of less than 20° or less than 15°.

According to a further example the sensor mount comprises a V-shaped or U-shaped geometric structure. Here, the V-shaped or U-shaped structure may comprise or constitute the recess or recessed portion provided with an insert opening for introducing at least a portion of the object into the recessed structure of the sensor mount.

According to a further example the sensor mount comprises a proximal portion, an intermediate portion at a distal portion. The proximal portion is fixed to the second distance sensor. The distal portion is fixed to the first distance sensor and the distal portion is connected or fixed to the proximal portion via the intermediate portion. According to some examples, the sensor mount may be unitarily shaped. It may be made of a single piece comprising the proximal portion, the intermediate portion and the distal portion.

According to further examples, at least one of the proximal portion, the intermediate portion and the distal portion may be provided or implemented as a separate piece, which may be detachably connectable to any of the further pieces or portions of the sensor mount.

The proximal portion and the distal portion may be separated from each other along at least one of the first direction and the second direction. They may be separated from each other along the measurement direction as defined by at least one of the first distance sensor and the second distance sensor.

The intermediate portion may be located at a transverse or lateral offset from the first virtual line. Here, the first virtual line may define an axial or longitudinal direction and the intermediate portion may be provided or located at a radial offset with respect to the first virtual line. By way of the intermediate portion, the distal portion and the proximal portion can be mechanically coupled or mechanically fixed to each other via the intermediate portion, which is located outside the first virtual line, and/or which is offset from the first virtual line.

According to a further example the intermediate portion of the sensor mount is located at a predefined distance from the first virtual line. This predefined distance may define a radial or transverse distance from the first virtual line, which may define a respective axial or longitudinal direction. The distance, i.e., the transverse or radial distance of the intermediate portion from the first virtual line may define a depth, e.g., a radial or transverse depth of the recess of the sensor mount. The respective radial or transverse distance between the intermediate portion and the virtual line and/or hence the depth of the recess of the sensor mount may define an insertion depth for introducing the first distance sensor into a hollow structure of the object.

According to some examples, the insert direction of the recess of the sensor mount may extend parallel to the radial or transverse depth of the sensor mount, i.e., it may correspond to the radial or transverse distance between the intermediate portion of the sensor mount and the first virtual line.

According to a further example the proximal portion and the distal portion of the sensor mount extend substantially parallel with respect to each other. Alternatively, the proximal portion and the distal portion of the sensor mount extend at a predefined tilt angle relative to each other. The tilt angle between a longitudinal extent of the distal portion and the proximal portion of the sensor mount may be comparatively small. It may be smaller than 45°, smaller than 30°, smaller than 20°, smaller than 15°, smaller than 10° or even smaller than 5°.

By way of a tilt angle, it may be possible to correctly adjust or to correctly align the first distance sensor with respect to a correspondingly tilted surface or surface section on the inside of a hollow structure of the object. In examples, wherein the inside surface of the object is of substantially tubular shape and when the longitudinal direction of an e.g. tubularly-shaped object extends along the insert direction as defined by the recess of the sensor mount, the distal portion of the sensor mount may also extend substantially along the insert direction or substantially parallel to the insert direction. It may also extend at a predefined tilt angle relative to the insert direction.

A longitudinal extent of the distal portion of the sensor mount at a particular tilt angle compared to a direction perpendicular to the first virtual line may be of particular benefit when the inside surface to be measured by the first distance sensor a correspondingly tilted or slanted. It may be beneficial to introduce the distal portion of the sensor mount and hence the first distance sensor at a particular tilt angle in order to match or to correspond a respective tilted inside surface of the hollow object. For instance, the inside surface of the hollow object may comprise a tapered or conically shaped surface portion, which may be then rather easily measured or scanned by the first distance sensor.

According to some examples, the proximal portion of the sensor mount extends perpendicular to the first virtual line. According to some examples and when the proximal portion and the distal portion of the sensor mount extend substantially parallel to each other, the distal portion of the sensor mount may extends substantially perpendicular to the first virtual line.

According to a further example the first distance sensor is arranged at a free end of the distal portion of the sensor mount. According to some examples the first distance sensor is arranged or positioned at an end section of the distal portion of the sensor mount that faces away the intermediate portion of the sensor mount. In this way, the first distance sensor may be introduced rather deeply along the insert direction into a hollow structure of the object.

According to another example the first distance sensor is configured to emit the first measurement beam at a predefined emission angle relative to a longitudinal extent of the distal portion of the sensor mount.

According to some examples, the first distance sensor may be configured to emit the first measurement beam at an emission angle of about 90° compared to the longitudinal extent of the distal portion of the sensor mount. This way, the first measurement beam may be emitted or directed along the first direction, which may be in line with the second direction of the second measurement beam as emitted or directed by the second distance sensor onto the reference surface. By emitting the first measurement beam at a predefined emission angle relative to the longitudinal extent of the distal portion of the sensor mount the measurement conducted by the first and the second distance sensors may follow the Abbe principle or may be compliant with the Abbe condition.

According to some examples the predefined emission angle ranges from 45° to one 135°, from 60° to 120°, from 75° 105° or it may range from 85° to 95°. According to some examples and when the distal portion of the sensor mount extends substantially coaxial with the insert direction and/or substantially coaxial with an axis of elongation or axis of symmetry of a tubular object, the predefined emission angle may be substantially equal to 90°. In this way, there can be provided a longitudinal insertion of the first distance sensor, i.e. along the insert direction, into the hollow structure of the object while directing the measurement beam radially outwardly from the distal portion of the sensor mount towards and onto an inside facing tubular sidewall of the object.

According to some examples, the first distance sensor is configured to emit the first measurement beam at a first emission angle and/or at a second emission angle. The second emission angle may be diametrically opposite to the first emission angle. According to some examples, the first emission angle may be substantially 90° with respect to the longitudinal extent or the distal portion of the sensor mount. The second emission angle may be substantially 90° but may be oriented in an opposite direction compared to the first emission angle.

Here, and with respect to a pivot axis of the sensor mount the first emission angle may be oriented radially outwardly and the second emission angle may be oriented radially inwardly. This way, and when the free end of the sensor mount with the first distance sensor is located inside a hollow structure of the object, the respective measurement beam can be directed in a radial direction, e.g., radially outwardly or radially inwardly onto an inside surface of the object. In this way, the measurement and mutual alignment flexibility between the measurement probe and the object can be substantially improved.

According to some examples, the first distance sensor may be configured to emit a first partial measurement beam along the first direction and to emit a second partial measurement beam along the second direction. Hence, the first measurement beam provided at the first distance sensor may be split into first and second partial measurement beams, which may be directed in opposite directions onto respective surfaces of the object.

Of course first and second directions along which the first or second measurement beams propagate towards the surface of the object do not necessarily have to directed perpendicular to the measurement tip or distal portion of the sensor mount. They may be oriented at any other predefined emission angle, which may be defined by the shape or structure of the surface of the object.

According to a further example the first distance sensor comprises an elongated hollow sleeve and a ferrule connected to an optical fiber and arranged inside the hollow sleeve. The first distance sensor further comprises a deflector, which is fixed to the elongated hollow sleeve to direct the first measurement beam, which is provided by the optical fiber, onto the first measurement point.

According to some examples, the deflector may be provided by a fiber end face, which may be tilted at a predefined angle so as to provide emission of the first measurement beam under a predefined emission angle with respect to the elongation of the respective fiber end.

By way of an optical fiber, the respective measurement beam can be rather easily transmitted from a light source and an optional optical coupler to the measurement probe and hence to the first distance sensor. Also, the first reflected measurement beam portion may be captures by the first distance sensor and may be re-coupled into the fiber.

Likewise, also the second distance sensor may be connected to the light source or to another light source via a further optical fiber. The elongated hollow sleeve of the first distance sensor may provide a rather precise arrangement and fixing of the optical fiber and the fiber ferrule as well as a fixing of the deflector. The fiber end, and hence the ferrule of the optical fiber may be fixed to the elongated hollow sleeve. Likewise, the deflector may be also fixed to the elongated hollow sleeve. In this way, there can be provided a well-defined distance and hence a well-defined optical path length between the deflector and the ferrule and hence between deflector and the end of the optical fiber at the first distance sensor.

According to a further example it may be provided that the first distance sensor and/or the second distance sensor are operable to focus the first measurement beam and the second measurement beam onto the respective surface of the object and the reference surface of the reference body.

According to some examples, the sensor mount is movable relative to the reference body and hence relative to the reference surface of the reference body. It may be movable relative to the reference body whilst maintaining a predefined distance to the reference surface, such that the second measurement beam is and remains focused on the reference surface. Likewise, also the first measurement beam may be focused on the surface of the object and hence on the measurement point of the surface of the object.

In order to maintain a focus condition, it may be necessary to move the measurement probe relative to the object, e.g., in a two-dimensional plane. The two-dimensional plane, in which the measurement probe may be movable relative to the object may coincide or may extend parallel to an axis of rotation of a mount, on which the object is rotationally mounted. In this way, the first distance sensor may be directed on any and each measurement point as provided on the surface of the object when attached to a mount of a respective measuring device, which is equipped with the present measurement probe.

According to another example the measurement probe comprises a bearing, which defines a pivot axis. The sensor mount is pivotable with respect to the pivot axis of the bearing. According to some examples, the reference surface of the reference body may comprise a spherical surface comprising or defining a center point, which coincides with the pivot axis. In this way and by rotating or pivoting the sensor mount with the pivot axis as an axis of rotation the overall distance between the second distance sensor and the reference surface may be only subject to minimal changes, which are detectable and/or quantitatively measurable by the second distance sensor. The spherical surface may be of semicircular shape and may lie in a plane that extends perpendicular to the pivot axis.

In this way, any imperfection of the mechanical bearing and hence of the rotational support or pivotable support of the sensor mount of the measurement probe can be quantitatively measured by the second distance sensor thus allowing to compensate a respective error of signals obtained or measurable by the first distance sensor when measuring a respective distance to the measurement point on the surface of the object.

According to another example the pivot axis of the measurement probe is intersected by the first virtual line. In this way, the Abbe principle can be maintained even with different and varying orientations of the sensor mount relative to the reference body.

According to further examples, the measurement probe comprises a holder acting as or providing a kind of a base of the measurement probe. The holder may be movable in a two-dimensional plane, which may likewise extend perpendicular to the pivot axis of the bearing. The reference body may be fixed on the holder. Also, the sensor mount with first and second distance sensors may be pivotally mounted or arranged on the holder. Typically, the bearing defining the pivot axis for the sensor mount is mounted and hence fixed on the holder of the measurement probe.

According to a further example of the measurement probe, the measurement probe further comprises a third distance sensor, which is configured to direct a third measurement beam onto another measurement point on the surface of the object along a third direction. The third distance sensor is further configured to capture a third reflected measurement beam portion, which is reflected from the surface.

The measurement probe further comprises a fourth distance sensor, which is configured to direct a fourth measurement beam onto another reference point on the reference surface along a fourth direction. The fourth distance sensor is further configured to capture a fourth reflected measurement beam portion, which is reflected from the reference surface. The third direction is opposite to the fourth direction. Also here, the third distance sensor and the fourth distance sensor may form or constitute a pair of sensors, which are mutually correlated. The third distance sensor and the fourth distance sensor may be arranged coaxially. They may provide a corresponding distance measurement along the third and the fourth directions, wherein third and fourth directions are opposite directions.

The third distance sensor may be coaxial to the fourth distance sensor. Accordingly, the third distance sensor and the fourth distance sensor may be arranged to follow the Abbe principle or to comply with the Abbe condition of measurement.

The third and the fourth distance sensors may be characterized by a comparatively small or limited extend in transverse direction or radial direction, i.e., a direction extending perpendicular to the third direction or fourth direction. In this way, the third distance sensor may be configured to enter longitudinally into a hollow structure of a hollow object in order to direct a respective third measurement beam in axial direction, e.g., onto a surface of the hollow object, that faces in longitudinal direction as seen with respect to the elongation of the hollow object.

According to some examples, the third direction extends at an angle of 180° relative to the fourth direction. Likewise, the first direction may extend at an angle of 180° relative to the second direction.

According to some examples, the first direction may extend at an angle of about 90° relative to the third direction. Likewise, the second direction may extend at an angle of 90° relative to the third direction. Likewise, the first direction may extend at an angle of 90° relative to the fourth direction and the third direction may extend at an angle of about 90° relative to the fourth direction. According to further examples, the third distance sensor and the fourth distance sensor may be characterized by a second virtual line, which may be defined by the another measurement point and the another reference point.

The another measurement point is that point on the surface of the object, which is measured by the third measurement beam. The another reference point is that point on the reference surface, which is measured by the fourth measurement beam. The second virtual line mount which may be defined by the another measurement point and the another reference point may intersect the first virtual line. It may extend at a predefined angle relative to the first virtual line.

According to some examples, the second virtual line intersects the first virtual line at an angle of about 90°.

According to a further example the arrangement of the third distance sensor and the fourth distance sensor may be void of a recess that would intersect the second virtual line. In this way, it can be provided, that the arrangement of third and fourth distance sensors is void of any radial projections or protrusions as seen in radial or transverse direction with the third or fourth directions as a longitudinal axis or axial direction. In this way, the radial or transverse extent of the arrangement of third and fourth distance sensors, can be kept rather compact, thus allowing to direct the third measurement beam in longitudinal direction with respect to the elongation of the hollow structure of the object.

According to a further example the third distance sensor is attached or fixed to the sensor mount. Likewise, the fourth distance sensor may be attached or fixed to the sensor mount.

The first and second distance sensors may be mutually fixed via the sensor mount. Likewise, the third and the fourth distance sensors may be mutually fixed via the sensor mount. Of course course, any of the first and the second distance sensors may be fixed to any of the third and the fourth distance sensors via the common sensor mount.

By rotating the sensor mount with respect to the pivot axis of the bearing all distance sensors attached to or fixed to the sensor mount will be subject to a common rotational motion with the pivot axis as an axis of rotation.

According to a further example the first virtual line intersects the second virtual line in the pivot axis of the bearing of the measurement probe.In this way, the measurement probe may be universally used in one of two generally available configurations. In a first measurement configuration the first and the second distance sensors may be active. Here, the first distance sensor may be arranged and configured to measure a first distance to a surface of the object while the second distance sensor measures a corresponding distance to a reference point on the reference surface. In this configuration the measurement probe may be particularly configured to direct the first measurement beam onto a radially inwardly facing surface of a hollow structure of the object.

In another and hence in a second configuration the third and the fourth distance sensors may be active while the first and the second distance sensors may be deactivated. Here, the third distance sensor may be configured to measure a distance to an axially facing surface of the object, which axially facing surface may comprise a surface normal with a component extending along the third or fourth direction, e.g. along an axis of rotation of the object or object mount.

Here, the third measurement beam may be oriented or directed along an axial or longitudinal direction with respect to the overall elongation or axial direction of the hollow structure of the object while the fourth distance sensor may be oriented in an opposite fourth direction. In this way, there can be measured a surface or surface profile of the object, which surface or surface profile comprises a surface normal that extends along the axial or longitudinal direction of the hollow object. In this way, stepped portions e.g. on an inside surface of a hollow object, can be precisely measured.

According to a further example a transverse extent of at least one of the third distance sensor and the fourth distance sensor perpendicular to at least one of the third direction and the fourth direction is smaller than a respective transverse extent of at least one of the first distance sensor and the second distance sensor. Accordingly, and due to the recess of the sensor mount located between e.g. the bearing of the sensor mount and the first distance sensor, the respective radial or transverse extent of the respective first sensor mount may be comparatively large.

Such a transverse or radial extent of the sensor mount may be beneficial to introduce the first sensor in longitudinal direction into a hollow structure of an object but may be disadvantageous to measure an axially facing surface or surface section on the inside the hollow object. For this it may be beneficial to make use of the third distance sensor in combination with the fourth distance sensor and to rotate the sensor mount accordingly when switching or transferring the measurement probe form a first configuration, in which the first and second distance sensors are active and in which the third and fourth distance sensors may be inactive, into the second configuration, in which the third and the fourth distance sensor will be active at the expense of the first and the second distance sensors, which may be then inactive.

According to another example the measurement probe comprises a holder, which is movable relative to the object with respect to a first scanning direction and with respect to a second scanning direction. The reference body is fixed to the holder and the sensor mount is arranged on the holder. The sensor mount may be fixed to the holder via the bearing. It may be fixed and/or attached to the holder via the bearing, which provides a pivoting of the sensor mount relative to the holder with respect to the pivot axis, i.e., with the pivot axis as an axis of rotation.

The holder may be movable with respect to the first and second scanning direction (x, y), e.g., by way of respective controller operated drives. The position of the holder along the first and the second scanning directions may be controlled by separate distance sensors, by way of which a distance of the holder relative to a fixed outer reference object can be quantitatively measured and/or determined. In this way, the position of the holder relative to a global fixed reference object or with respect to numerous global and fixed reference objects can be precisely measured. Also here, respective distance sensors may be implemented as interferometric distance sensors.

According to another aspect the present disclosure relates to a measuring device for measuring a surface or profile of an object. The measuring device may be implemented as a contactless measuring device. It may comprise an interferometric optical measuring device. The measuring device comprises a light source, configured to generate and to emit a beam of light. The measuring device further comprises a mount to fix and/or to support the object. The measuring device further comprises a measurement probe as described above. The measurement probe is optically coupled to the light source. The measurement probe is movable relative to the mount, e.g., in order to scan a surface of the object.

According to some examples, the mount may be rotatable relative to an axis of rotation. The axis of rotation may extend or may overlap with a plane as defined by the first and the second scanning directions of the measurement probe. According to some examples, the rotation axis of the mount may extend parallel to the plane as defined by the first and by the second scanning directions.

The directions along which the distance sensors of the measurement probe may be oriented and along which the distance sensors of the measurement probe may direct a respective measurement beam, may be located in the scanning plane, which is defined by the first and by the second scanning directions. By rotating the object with respect to the rotation axis of the mount, which rotation axis extends substantially parallel to the scanning plane, every and each point provided on the surface of the object may be duly and precisely scanned by any of the first or third distance sensors of the measurement probe.

Since the measuring device comprises a measurement probe as described above, all features, effects and benefits as described above in connection with the measurement probe equally apply to the measuring device; and vice versa.

According to a further example of the measuring device the measuring device further comprises a first detector, which is coupled to the first distance sensor. The measuring device further comprises a second detector, which is coupled to the second distance sensor. The measuring device further comprises a signal analyzer, which is coupled to the first detector and which is coupled to the second detector. The signal analyzer is configured to determine or to derive the distance between the measurement point on the surface of the object and the reference point on the reference surface of the reference body by a respective signal analysis of signals obtainable or obtained from the first detector and from the second detector, respectively.

Specifically, the first detector is coupled or connected to the first distance sensor in such a way that a first reflected measurement beam portion reflected from the surface of the measurement point is detected by the first detector. Likewise or correspondingly, the second detector is coupled to the second distance sensor such as to detect and/or to analyze the second reflected measurement beam portion reflected from the reference surface.

In some examples, wherein the measuring device is implemented as an interferometric measuring device, the first and second measurement beam may be part of an optical beam, which has been split into the respective measurement beam and into a reference beam. The reference beam is typically recombined with the associated first or second reflected measurement beam portion so as to obtain an interference pattern on the detector. There may be further imposed an artificial phase shift between the reference beam and the reflected measurement beam portions of the first and the second measurement beams. In this way, alternating sequences of interference fringes may traverse the detector, which allows to measure the relative phase between the first reference beam of the first optical beam and the first reflected measurement beam portion.

Likewise, there can be precisely determined a phase shift between the reference beam of the second optical beam and the second reflected measurement beam portion on the basis of which there can be derived a rather precise distance measurement between the first distance sensor and the measurement point on the surface of the object and hence between the second distance sensor and the reference point on the reference surface.

Likewise, there may be provided a third detector associated with or coupled to the third distance sensor and a fourth detector associated with or coupled to the fourth distance sensor in order to measure respective third and fourth distances. generally, signal analysis of the third detector coupled to the third distance sensor as well as a signal analysis of the fourth detector coupled to the fourth distance sensor may be implemented in close correspondence or even identically compared to the signal analysis as described above in connection with any one of the first and the second detectors coupled to respective first and second distance sensors.

According to another aspect the present disclosure relates to a method of measuring a distance between a measurement point on a surface of an object and a reference point on a reference surface of a reference body. The method may be implemented by using a measurement probe and/or by using a measuring device as described above. Here, a first measurement beam is directed onto the measurement point on the surface of the object along a first direction. A first reflected measurement beam portion reflected from the surface is captured by the first distance sensor.

There is further directed a second measurement beam onto the reference point on the reference surface along a second direction. A second reflected measurement beam portion reflected from the reference surface is captured, e.g., by the second distance sensor. Based on the first reflected measurement beam portion and the second reflected measurement beam portion a distance between the measurement point on the surface and the reference point on the reference surface is derived.

The present method is of particular use and is particularly suitable to measure an inside surface of a hollow structure of the object. Here, and before directing the first measurement beam onto the measurement point on the surface of the object the first distance sensor, e.g., mounted or provided on a distal portion of a sensor mount, may be introduced longitudinally into a longitudinally extending hollow structure of the object.

The first distance sensor may be directed towards an inside surface of the hollow structure. It may be oriented radially outwardly with respect to the elongation or central axis of the hollow structure of the object, which may be a tubular hollow shape or structure.

In this way, there can be provided a rather precise distance measurement between the first distance sensor of the measurement probe and the surface of the object. Any positional mismatch of the first distance sensor relative to the reference surface or reference body may be then measured by the second distance sensor, which is operable to measure a distance to the reference point on the reference surface, which is associated with the measurement point on the surface of the object. In this way and for each distance measured by the first distance sensor there may be associated and provided a second distance to the corresponding reference point on the reference surface by way of which any positional mismatch of the first distance sensor, e.g., with respect to a pivot axis of the measurement probe, can be precisely and quantitatively corrected.

Insofar and since the method uses a measurement probe as described above, all features, effects and benefits as described above in connection with the measurement probe equally apply to the method of measuring a distance between a measurement point on the surface of the object and the reference point on the reference surface of the reference body.

The measurement beams emitted by the various distance sensor may be focused on the respective surfaces, i.e., under measurement surface of the object and on the reference surface of the reference body. Focusing of the respective measurement beams on the surfaces provides an increase of a signal to noise ratio and hence an increase of a signal strength derived from the measurement beam portion reflected on the respective surface. The method may further provide point-wise scanning of the surface of the object in combination with a point-wise scanning of the reference surface.

According to another aspect there is provided a computer program comprising computer readable instructions, which when executed by a processor of a measuring device as described above cause the processor to carry out the steps of the method as described above.

According to a further example the computer program may be provided on a computer readable storage medium. The storage medium may hence comprise the computer readable instructions, which when executed by the processor of the measuring device, cause the processor to carry out the steps of the method as described above. Since the computer program is particularly executable by a processor of a measuring device as described above, which measuring device is equipped with a measurement probe as described above, all features, effects and benefits as described above in connection with any of the measurement probe and the measuring device equally apply to the computer program; and vice versa.

### Brief description of the drawings

In the following, numerous examples of the measurement probe, the measuring device and method of measuring a surface and/or profile of an object are described in greater detail by making reference to the drawings, in which:
- Fig. 1: schematically illustrates an example of a measurement probe as described herein,
- Fig. 2: shows a section of the measurement probe according to Fig. 1 in an enlarged view,
- Fig. 3: is a further enlarged illustration of a portion of the measurement probe,
- Fig. 4: is a further view of the measurement probe in an enlarged illustration,
- Fig. 5: shows a further configuration of the measurement probe according to Fig. 1,
- Fig. 6: shows a further example of a measurement probe,
- Fig. 7: shows a further example of a measurement probe provided with third and fourth distance sensors in a first configuration,
- Fig. 8: is a further illustration of the measurement probe according to Fig. 7 in a further configuration of use,
- Fig. 9i: is a detailed view of a portion of an example of the measurement probe according to Figs. 7 and 8,
- Fig. 10: is a further enlarged illustration of a portion of the measurement probe according to Figs. 7 and 8,
- Fig. 11: is a schematic and enlarged illustration of a portion of a sensor mount,
- Fig. 12: is an isolated illustration of an example of the sensor mount to be used with the measurement probe,
- Fig. 13: shows a block diagram of an example of a measuring device making use of the measurement probe.
- Fig. 14: is a flowchart of a method of measuring a distance, surface of profile of an object making use of the measurement probe and/or or of the measuring device as described herein,
- Fig. 15: is an illustration of a further example of the measurement probe and
- Fig. 16: is a further configuration of the measurement probe according to Fig. 15 in relation to the object.

### Detailed Description

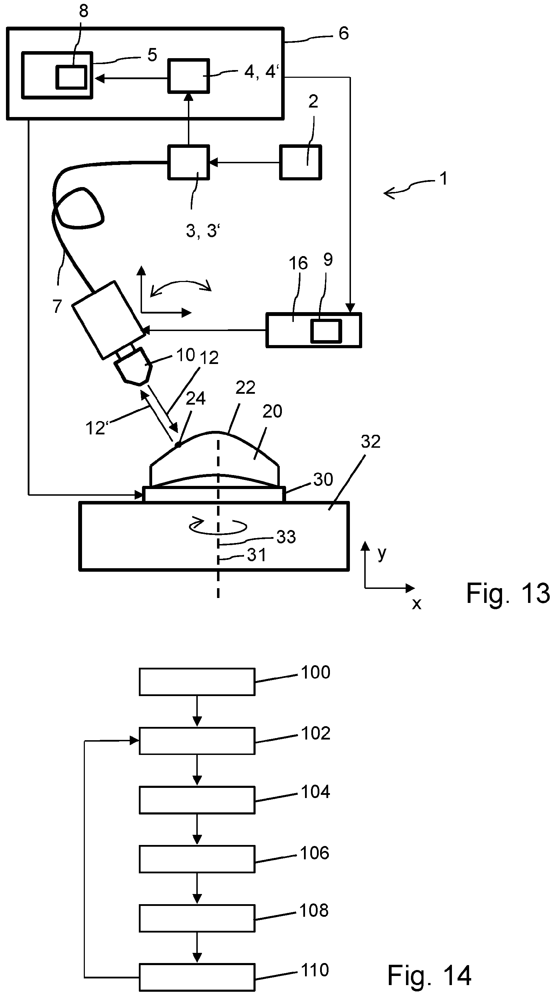

In Fig. 13 one example of the measurement device 1 is illustrated in a block diagram. The measurement device 1 comprises a light source 2, an optical coupler 3, a detector 4 and a measurement probe 10. The measurement probe 10 is optically coupled to the light source 2 through an optical fiber 7. An optical beam 11 generated by the light source 2 may be directed to the measurement probe 10 via the optical coupler 3 and the optical fiber 7. When the measurement device 1 is implemented as an interferometric measurement device, the optical beam 11 is split into a measurement beam 12 directed to an object 20 and a reference beam 14, as e.g. described in greater detail in at least one of the documents DE 10 2011 011 065 B4 or US 8 736 850 B2.

The reference beam may 14 may be generated at a fiber exit face located inside the measurement probe 10. A portion of the measurement beam 12', which is reflected from a surface 22 of the object 20 is captured by the measurement probe 10 and co-propagates with the reference beam 14 in the optical fiber 7 towards the optical coupler 3. With typical examples, the optical coupling 3 comprises an optical circulator.

Light propagating from the measurement probe 10 towards the optical coupler 3 is redirected towards the detector 4. The detector 4 comprises one or numerous light-sensitive elements, such as an array or matrix of charge coupled devices (CCD) in order to detect an interference pattern obtained by the interference of the reference beam 14 and the reflected measurement beam 12, which is reflected on the surface 22 of the object 20. The detector 4 is connected to a signal analyzer 5 in order to resolve and/or to determine a relative phase between the reflected measurement beam 12' and the reference beam 14.

Typically, the signal analyzer 5 comprises a processor 8 operable to calculate or to determine a relative phase, hence an optical path difference between the reference beam 14 and the reflected measurement beam 12' obtained and/or captured by the measurement probe 10. Based on the optical path difference a distance to selected points on the surface 24 of the object 20 can be determined. With the further knowledge of the exact position of the measurement probe with regards to a global coordinate system of the measurement device 1, the position of the respective measurement points 24 on the surface 22 of the object 20 can be obtained.

The object 10, e.g. in form of an optical element or in form of a cavity of a mount for one or multiple optical elements, can be fixed and/or arranged on a mount 30. The mount 30 may be rotationally supported on a rotary measurement stage 32. The measurement stage 32 defines a reference axis 31. The reference axis 31 may coincide with an axis of rotation 33 as defined by the measurement stage 30.

The measurement device 1 further comprises a measurement probe controller 16. The measurement probe controller 16 comprises at least a processor 9. The measurement probe controller 16 typically controls and governs a position as well as an orientation of the measurement probe 10. The signal analyzer 5 and the detector 4 may be implemented as integrated components of a controller 6 of the measurement device 1. In this way the measurement probe controller 16 may be also implemented as a component, e.g. as an integral component of the controller 6. The processors 8, 9 as illustrated here may be also integrated in a single processing unit of the controller 6.

The measurement probe controller 16 may be also implemented as a separate controller. The controller 6 is configured to control or to communicate with the measurement probe controller 16. In this way, the controller 16 is configured to determine the measurement points 24 to be scanned on the surface 22 of the object 20 and to assign the measurement beam portions 12' captured from the respective measurement points 24 to respective measurement points 24 on the surface 22.

With some examples the mount 30 may be controllable by the controller 6. Hence, the controller 6 may be configured to orient or to move the mount 30 and hence the object 20 relative to the reference axis 31. In this way, the controller 6 may be configured to automatically adjust a decenter and/or or a tilt of the object 20 relative to the reference axis 31. The present example is described in the basis of cylindrical coordinates. Since the mount 30 is rotatable relative to the axis of rotation 33 and hence relative to the reference axis 31 while the mount 30 is displaceable in radial direction r relative to the stationary measurement stage 32. The mount 30 may be also tiltable at least with regards to a first tilt axis and with regards to a second tilt axis. These tilt axes may extend in a plane perpendicular to the reference axis 31 or perpendicular to the axis of rotation 33. The tilt axes may be stationary with regard to the mount 30. With some examples, the tilt axes may be reconfigurable. Hence, their position and/or orientation may vary.

The first distance sensor 10 is configured measure precisely a distance to a measurement point 24 on the surface 22 of the object 20. For this it may be required that the respective measurement beam 12 is directed substantially perpendicularly to the surface portion of the measurement surface 22 at which the respective measurement point 24 is located.

In order to obtain a reflected measurement beam portion 12' of sufficient intensity or signal strength the angle of incidence of the measurement beam 12 onto the measurement point 24 should be substantially perpendicular. It may be provided that the measurement beam 12 is directed at a certain angle of acceptance, which slightly deviates from the perpendicular orientation. However, for obtaining an optimal signal-to-noise ratio an almost perpendicular orientation or direction of the measurement beam 12 onto the measurement point 24 and hence onto the surface 22 may be of particular benefit.

For this, it may be required that the first distance sensor 50 of the measurement probe 10 has to be oriented in accordance to the curvature or profile of the surface 22. A reorientation, in particular a rotation of the measurement probe 10, in particular of the first distance sensor 50 of the measurement probe 10 with respect to a pivot axis 46, e.g. extending in a z direction, which may be perpendicular to a first and a second scanning direction (x, y) along which the measurement probe 10 is movable relative to the mount 30, may induce a positional offset in the x-y plane.

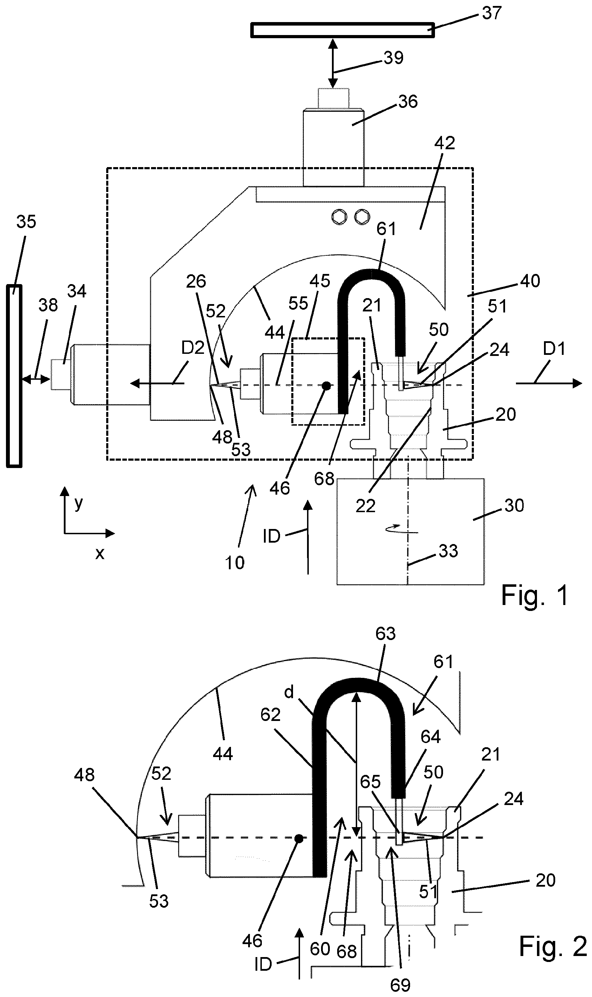

In order to compensate for such a positional and e.g. pivoting-induced offset, that may be due to a bearing 45 defining the pivot axis 46, the measurement probe 10 may be provided with a second distance sensor 52, which is configured to direct a second measurement beam 26 onto a reference point 48 on a reference surface 44 along a second direction D2 as illustrated in Fig. 1.

Accordingly, the measurement probe 10 as shown in detail in Fig. 1 comprises a first distance sensor 50 configured to direct a first measurement beam 12 onto the measurement point 24 on a surface 22 of an object 20 along a first direction D1. The first distance sensor is further configured to capture a first reflected measurement beam portion 12', which is reflected from the surface 22, in particular, which is reflected from the measurement point 24 on the surface 22 of the object.

The measurement probe 10 further comprises a second distance sensor 52, which is configured to direct a second measurement beam onto a reference point 48 on a reference surface 44 of a reference body 42 of the measurement probe along a second direction D2. The second distance sensor 52 is configured to capture a second reflected measurement beam portion 26', which is reflected from the reference surface 44, in particular, which is reflected from the reference point 48 of the reference surface 44. The reference surface 44 may comprise a curved shape. It may comprise a spherical surface 44, with a radial center that coincides with the people axis 46.

The reference surface 44 is precisely known by the measurement device 1. The total or overall position of the measurement probe 10 relative to the mount 30 and hence relative to the object 20 can be further determined by way of supplemental distance sensors 34, 36, which are rigidly or fixedly connected to the measurement probe 10. The measurement probe 10 may comprise a holder 40, which may serve as a base for the numerous components of the probe 10. Accordingly, the bearing 45 and hence the pivoting arrangement of the sensor holder 61 may be fixed or arranged on the holder 40. Likewise, the reference body 42 is fixed on the holder 40. It may be in a fixed relation to the bearing 45.

The distance sensor 34 may face in a x-direction and may be configured to measure a longitudinal distance 38 to a reference object 35, e.g. comprising a reflective surface. Likewise, the further distance sensor 36 may face in a y-direction, e.g., to conduct a measurement of a longitudinal distance 39 2 a further reference object 37, which may be likewise provided with a reflective surface. Both sensors 34, 36 may be implemented as an interferometric distance sensors as described above. By way of the sensors 34, 36 the position of the holder 40 in the x-y plane can be precisely determined. By way of the first and second distance sensors 50, 52 can be further provided a precise distance measurement to the surface 22 of the object 20. The signals from the distance sensors 50, 52, 36, 34 are mutually combined to derive a precise position and/or surface profile measurement of the surface 22 of the object 20.

The first and the second distance sensors 50, 52 may be separately coupled to a first detector 4 and to a second detector 4', the latter of which being only indicated in Fig. 13. Hence, there may be provided numerous fibers 7, by of which the measurement probe 10 is optically coupled to the optical coupler 3 or to a number of optical couplers 3, 3' and to respective detectors 4, 4'. In this way, the signal analyzer 5, which may be coupled to a number of individual detectors 4, 4' may be configured to derive a first distance 51 between the first distance sensor 50 and the first measurement point 24 and to derive a second distance 53 between the second distance sensor 52 and the reference point 48.

Any positional mismatch of the first and second distance sensors 50, 52 relative to the reference body 42, which might be due to the rather imperfect rotational support or to the pivotal arrangement of the first and second distance sensor 50, 52 on the measurement probe 10 and which may lead to trade off of the first distance, may reflect in a respective trade off or offset of the second distance.

By measuring both, the first distance 51 between the first distance sensor 10 to the measurement point 24 and by measuring the corresponding second distance 53 between the second distance sensor 52 and the reference point 48, any positional mismatch or position error as induced by the rotational support of the first and the second distance sensors 50, 52 can be effectively compensated for.

As further illustrated in Figs. 1-4, the measurement probe 10 comprises a sensor mount 61, which is located between the first distance sensor 50 and the second distance sensor 52. Here, the first distance sensor 50 may be fixed or connected to the second distance sensor by the sensor mount 61.

Moreover, the sensor mount 61 may be of a V- or U-shaped profile or geometric structure. This particular geometric structure of the sensor mount 61 provides a recess 60, which is traversed by a virtual line 55, which virtual line 55 extends between the reference point 48 on the reference surface 44 and the measurement point 24 on the surface 22 of the object 20. The virtual line 55 may coincide or may be arranged coaxial with the first direction D1 and with the second direction D2 along which the first and the second distance sensors 50, 52 are aligned or oriented, respectively.

According to some examples, the reference point 48 on the reference surface 44 may coincide with a focal point of the second measurement beam 26. The measurement point 24 on the surface 22 of the object 20 may coincide with a focal point of the first measurement beam 12. Insofar, the measurement point 24 and the reference point, which are typically located on the surfaces 22, 44 may be entirely defined by the configuration of the measurement probe 10. Accordingly, also the virtual line 55, as defined by the measurement point 24 and the reference point 48 may be entirely and/or unequivocally defined by the measurement probe 10 and may be thus definable even in the absence of the object 20 and/or in the absence of the reference body 42.

By having a recess 60, which is traversed by the first virtual line 55, the sensor mount 61 allows and supports to introduce the first distance sensor 50 into a hollow structure of the object 20. The object 20 according to Figs. 1-4 may comprise a lens barrel. The object 20 may comprise an object portion 21, such as a tubularly shaped or barrel-shaped sidewall, which sidewall 21 may enter the recess 60 as formed or provided by the sensor mount 61.

As illustrated in Fig. 1 the elongation of the hollow structure of the object 20 may extend parallel or coaxial with the axis of rotation 33 of the mount 30. The first and second directions D1 and D2 may extend perpendicular to the axis of rotation 33. With the first and the second directions D1, D2 as a longitudinal direction, the recess 60 may extend in transverse or radial direction and hence substantially along the axis of rotation 33 of the mount 30 to which the object 20 is fixed.

The sensor mount 61 V-shaped or U-shaped geometry allows an alignment of the first and second distance sensors 50, 52 on and/or along the virtual line 55 while allowing at least a portion of the object 21 to enter into the recess 60 and/or to enter into a region located between the first and the second distance sensors 50, 52. In this way, the first distance sensor 50 can be inserted into the hollow structure of the object 20 and may direct the first measurement beam 12 onto an inside facing surface 24 as provided on the inside of the sidewall or object portion 21 of the object 20.

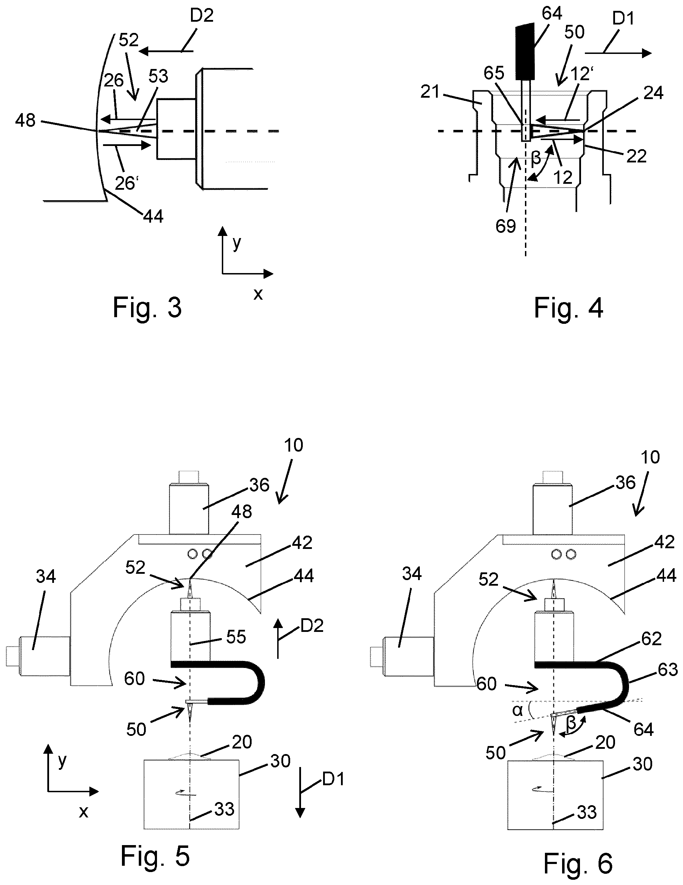

Here, the distance between the first distance sensor 50 and the surface 22 can be kept within a predefined margin as defined by e.g. the focal length of the first distance sensor 50. As particularly illustrated in Figs. 1 and 2, the sensor mount 61 comprises a proximal portion 62, which is connected to the second distance sensor 52. The sensor mount 61 further comprises a distal portion 64, to which the first distance sensor 50 is connected or mounted. The proximal portion 62 is connected to the distal portion 64 by an intermediate portion 63. The distal portion 64 and the proximal portion 62 may extend substantially parallel to each other. In the example according to Fig. 6, the distal portion 64 and the proximal portion 62 may extend at a predefined tilt angle α, which allows to introduce the first distance sensor 50 along a tilted orientation with respect to the axis of rotation 33 and/or with respect to a perpendicular direction relative to at least one of the first and the second directions D1 or D2.

The intermediate portion 63 is located at a predefined distance d from the first virtual line 55. The intermediate portion 63 may form or constitute a bridging portion between the distal portion 64 and the proximal portion 62, which are separated along the first direction D1. The proximal portion 62, the intermediate portion 63 and the distal portion 64 may form or constitute the recess 60 or the recessed structure, which allows to receive a portion 21 of the object 20 between the proximal portion 62 and the distal portion 64 while maintaining a coaxial alignment and/or coaxial arrangement of the first and the second distance sensors 50, 52 along the first direction D1 and the second direction D2.

With respect to the tubular structure of the object 20 and/or with respect to an axis of symmetry extending substantially parallel or coaxial with the axis of rotation 33 of the mount 30, the recess 60 comprises a depth d as seen along the axis of rotation 33. The first direction D1 and the second direction D2 may extend in radial direction with respect to the axis of rotation 33. In the illustration according to Figs. 1 and 2 the first and the second directions D1 and D2 may extend oppositely along the x-axis.

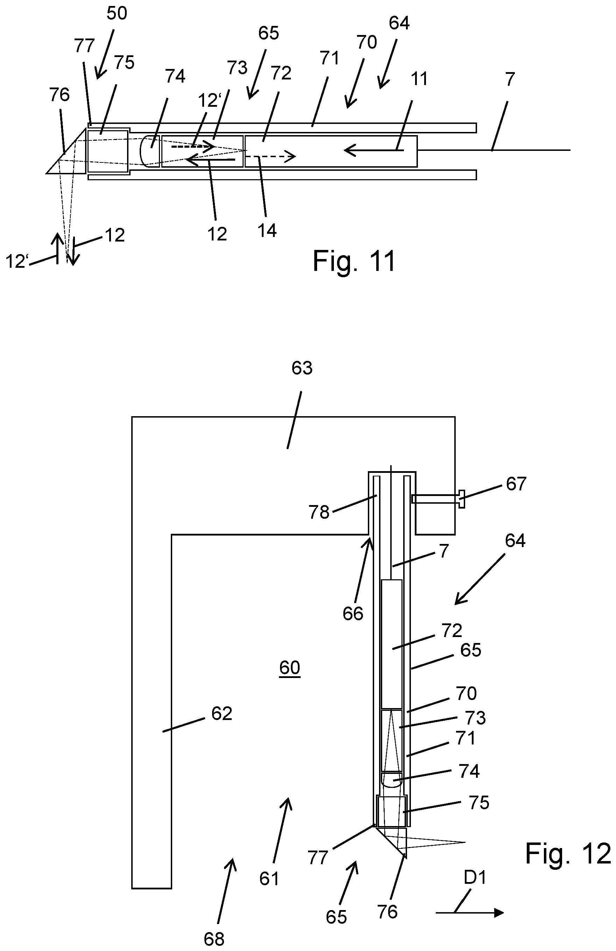

As becomes further apparent from Figs. 1-4 the first distance sensor 50 is configured to direct the first measurement beam 12 at a certain and predefined emission angle β with respect to the longitudinal extent of the distal portion 64. In Figs. 11 and 12 there is shown one example of a free end of the distal portion 64. There, the distal portion 64 may comprise or may be constituted by a longitudinally extending sleeve 70. The sleeve 70 may be hollow. It may comprises a tubularly-shaped sidewall 71. Optionally, the sidewall 71 may be of rather, rectangular, triangular or polygonal cross-section.

Inside the sleeve 70 and hence inside the sidewall 71 there may be arranged and fixed a ferrule 72 forming a longitudinal end of the fiber 7. Hence, the fiber 7, which is optically connected to the light source terminates in the ferrule 72. At a longitudinal end of the ferrule 72 facing away the fiber 7 there may be provided a spacer 73. A longitudinal end of the spacer 73 facing away the ferrule 72 may be provided an optical element 74, such as a focusing lens. By way of the optical element 74, the first measurement beam 12 can be directed and/or focused to the surface 22 of the object 20.

Distally from the optical element 74 there may be provided a further optional spacer 75. The spacer may be located at a longitudinal end section 77 of the sleeve 70. The spacer 75 may be further connected with a deflector 76, e.g., implemented as a deflection prism.

By way of the deflector 76 the direction of the first measurement beam 12 can be changed ad deflected in accordance to the deflection an angle of the deflector 76. In the present example the deflector 76 provides a beam deflection by about 90°.

Hence, with respect to the longitudinal direction of the distal portion 64 and hence with respect to a longitudinal direction of the sleeve 70 the first measurement beam 12 is redirected and propagates in a radial direction with respect to the elongation or axial direction of the sleeve 70 or distal portion 60 when leaving the free end of the sleeve 70. In this way and by the beam deflection at the free end of the distal portion 64, the measurement beam 12 can be directed substantially perpendicular onto an inside surface 22 of the hollow object 20. By rotating the object 20 with respect to the axis of rotation 33, the inside surface 22 can be scanned by the measurement beam 12. Hence, a number of measurement points 24 can be measured by the measurement beam 12 and by a resulting number of first reflected measurement beam portions 12' as indicated in Fig. 11.

In Fig. 11 it is further illustrated that the fiber 7 provides an optical beam 11, which at a longitudinal end face or inside the ferrule rule 72 is split into a reference beam 14 and the first measurement beam 12. The measurement beam 12 propagates through the optical element 74 and through the deflector 76 onto the surface 22 of the object 20. A reflected beam portion 12' propagates in the opposite direction. For this it is of particular benefit that the angle of incidence of the measurement beam 12 on the surface 22 is substantially perpendicular to the surface 22.

Moreover, the measurement beam 12 can be focused on the surface 22. For this it is required that the first distance sensor 50 is positioned at a distance along the first direction D1, which substantially corresponds with the focal length of the first measurement beam 12. The first reflected beam portion 12' reentering the first distance sensor 50 recombines with the reference beam 14 and interferes with the reference beam 14.

The optical path difference between the first reflected measurement beam portion 12' and the reference beam 14 is measurable by counting interference fringes and is directly indicative of the first distance 51 between the first distance sensor 50 and the measurement point 24 on the surface 22 of the object 20.

As further indicated in Fig. 12, the distal portion 64 may be detachably connectable to the intermediate portion 63. The intermediate portion 63 and the proximal portion 62 may be implemented as a single piece. They may be integrally formed while the distal portion 64, e.g., the sleeve 70 may be detachably connectable to an end or end section of the intermediate portion 63 that faces away at a distance from the proximal portion 62.

Insofar the distal portion and/or the sleeve 70 attached to the intermediate portion may comprise or constitute a measurement tip 65 at which the first distance sensor 50 is located.

As indicated in Fig. 12 the intermediate portion 63 may comprise a receptacle 66 sized to receive a longitudinal end and hence an end section 78 of the sleeve 70. Inside the receptacle 66 the end section 78 may be fastened by a fastener 76, e.g. implemented as a screw or the like fastening element. This allows and supports an exchangeable arrangement or fixing of the sleeve 70. The sleeve 70 as illustrated in Fig. 2 extends substantially parallel to the proximal portion 62.

It may extend substantially perpendicular to the first direction D1. With other examples, the angular orientation, hence, the longitudinal extent of the sleeve 70 or of the distal portion 64 may vary from a perpendicular elongation or extent. For instance, and as shown in Fig. 6 the distal portion 64 may extend at a predefined tilt angle α with respect to the longitudinal extent of the proximal portion 62 and/or with respect to a transverse plane extending substantially perpendicular to the first direction D1 or second direction D2.

In comparison to the configuration as shown in Figs. 1 and 2 the sensor mount 61 has been reoriented. Here, the first direction D1 points downwardly along the vertical y direction and the second direction D2 points vertically upwardly, also along the y-direction.

In the configuration according to Figs. 5 and 6 the first distance sensor 50 is directed onto an upper surface 22 of an object 20, e.g. implemented as an optical element, which is arranged and/or fixed on the mount 30 and which has a measurement surface 22 comprising a surface normal with a directional component facing along the axis of rotation 33.

As becomes apparent from a comparison of Figs. 1 and 2 with Figs. 5 and 6 the entire sensor mount 61 is rotatable relative to the pivot axis 46.

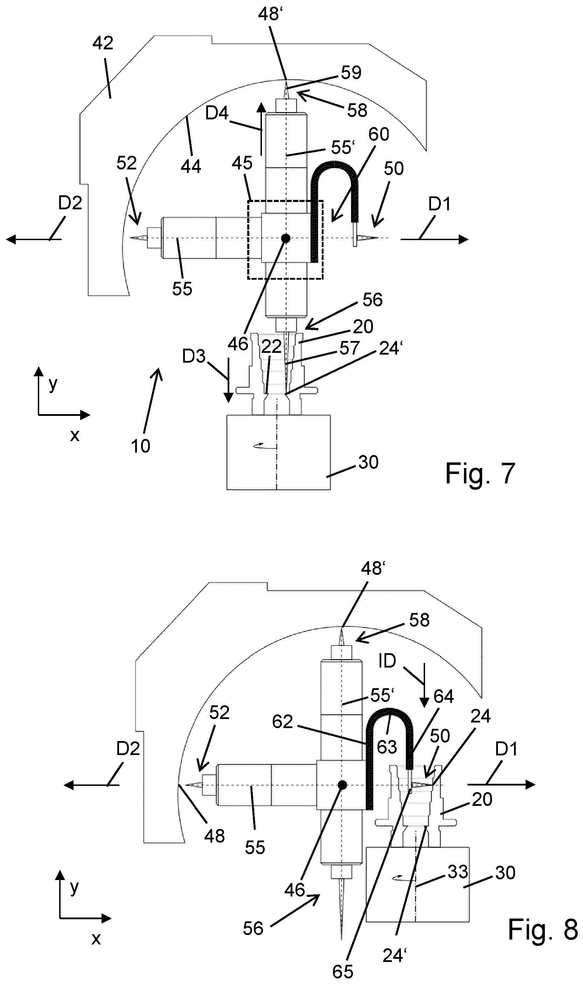

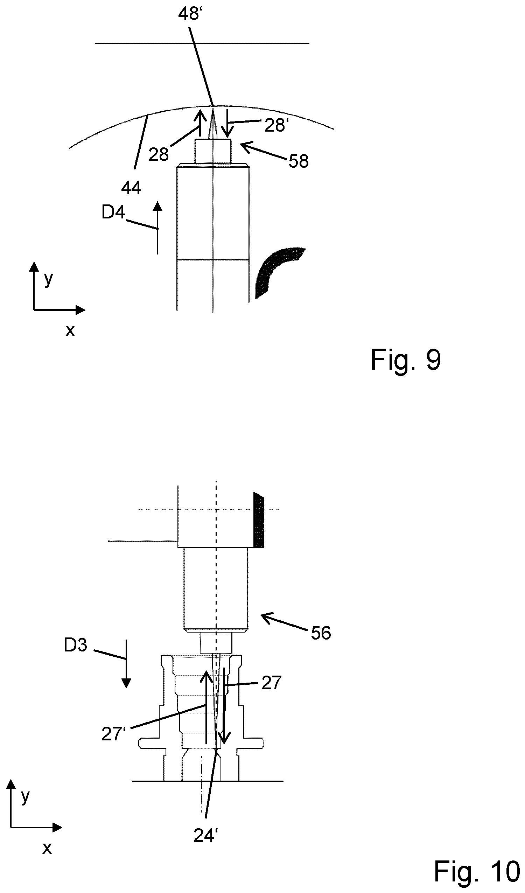

With the further example of a measurement probe 10 as illustrated in Fig. 7-10 the measurement probe 10 is additionally equipped with a third distance sensor 56 and a fourth distance sensor 58. The third distance sensor 58 is configured to direct a third measurement beam 27 onto another measurement point 24' of the surface 22 of the object 20 along an third direction D3 and is further configured to capture a third reflected measurement beam portion 27', which is reflected from the surface 22 as illustrated in Fig. 10.

Likewise, the fourth distance sensor 58 is configured to direct a fourth measurement beam 28 onto another reference point 48' on the reference surface 44 along a direction D4 and is further configured to capture a fourth reflected measurement beam portion 28, which is reflected from the reference surface 44. The third direction D3 is opposite the fourth direction D4.

With the third and fourth distance sensors 56, 58 there may be also defined a second virtual line 55', which extends from the another measurement point 24' to the another reference point 48'. The second virtual line 55' intersects the first virtual line 55 as shown in Fig. 7. It may be of particular benefit, that the first virtual line 55 and the second virtual line 55' intersect in the pivot axis 46 as defined by the bearing 45. In this way, the third and fourth measurement beams 27, 28 may comply with the Abbe principle. Also, the first and the second distance sensors 50, 52 may comply with the Abbe requirements. In the configuration according to Fig. 7 it is exclusively the third distance sensor 56, which faces the object 20. The third distance sensor 56 and the fourth distance sensor 58 may be void of a recess or recessed section, that would be traversed or crossed by the second virtual line 55'.

Accordingly, the transverse or radial extent of the third distance sensor 56 with respect to the third direction D3 as a longitudinal direction is substantially smaller compared to the respective radial extent of the first distance sensor 50 with the first direction D1 as an axial direction or axis of elongation. In this way the third distance sensor 56 in combination with the fourth distance sensor 58 is configured to measure a surface or surface section on the inside of the hollow tubular structure of the object 20 that faces along the surface normal of the mount or parallel to the axis of rotation 33.

Hence, in the configuration as shown in Fig. 7, which may be a second configuration of the measurement probe 10, the third distance sensor 56 and the fourth distance sensor 58 may be activated while the first and the second distance sensors 50, 52 may be substantially deactivated or inactive. In this first configuration as shown in Fig. 7 the third distance sensor 56 directs a third measurement beam 27 onto the another measurement point 24', which has a surface normal with a component facing or extending along the axis of rotation 33.

In order to measure an inside surface or a surface portion of the inside surface 22 of the hollow object 21 that faces inwardly, e.g., radially inwardly from the tubularly-shaped sidewall 21, the measurement probe 10 may be reoriented or reconfigure into a first configuration as shown in Fig. 8. This may be obtained by simply rotating the entire sensor mount 61 by about 90° with respect to the pivot axis 46. It may be then that the third and the fourth distance sensors 56, 58 are inactive or deactivated while the first and the second distance sensor 50, 52 are activated.

Due to the particular shape of the sensor mount 61 and the recess 50 of the sensor mount 61 it may be provided that the free end of the distal portion 64 of the sensor mount 64, which is provided with the first distance sensor 58 ca be introduced into and through an insert opening 68 of the recess 60 along the insert direction ID and hence along, parallel or substantially parallel to the axis of rotation 33 as indicated in Fig. 8.

The first distance sensor 50 further provides a deflection of the measurement beam 12 at the free end of the distal portion 64, which is provided with a respective measurement tip 65. Hence, the measurement tip 65 may be formed or provided by the elongated sleeve 70. The recess 60 may be shaped o close correspondence to the geometric profile or shape of the hollow structure of the object 20 in order to enable a complete scanning of the entire inside surface 22 of the hollow object 20.

In the flowchart of Fig. 14 the numerous steps of conducting a method of measuring a distance between the measurement point 24 on the surface 22 of the object 20 and a reference point 48 on a reference surface 44 is schematically illustrated. In step 100 the measurement probe 10 duly connected or coupled to the measuring device 1 is provided. In step 102 a first measurement beam 12 is directed onto the measurement point 24 of the surface 22 of the object 20 along the first direction D1. In step 104 a reflected measurement beam portion 12' is reflected from the surface 22 and is captured by the first distance sensor 50. In step 106, which may be conducted simultaneously with step 102 there is directed and a second measurement beam 26 onto the reference point 48 on the reference surface 44 along the second direction D2 and in step 108 a second reflected measurement beam portion 26', which is reflected by the reference surface 44, is captured by the second distance sensor 52.

Thereafter and in step 110 the relative position between the measurement probe 10 and the object 20 may be slightly shifted so as to direct the first measurement beam 12 onto another measurement point 24 of the surface 22 of the object 20 and to direct the second measurement beam 26 onto another reference point 48 on the reference surface 44, which corresponds to the another measurement point 24. The procedure of steps 102-108 may be then repeated. In this way, a number of measurement points 24 on the surface can be scanned.

The entire procedure as described with steps 102 - 108 may be likewise conducted with the third distance sensor 56 and the fourth distance sensor 58, whichever configuration is suitable for measuring a respective distance between the first or third distance sensor and the measurement points 24 on the respective surface 22. Since the measurement probe 10 is configured to measure a second distance 53 that corresponds to the first distance 51 there can be always conducted a rather precise offset correction. From the first distance 51 measurable by the first distance sensor 50 and from the second distance 53 measurable by the second distance sensor 52 there can be always provided and derived a total distance between the measurement point 24 and the reference point 48 on the reference surface 44. The shape or profile of the reference surface 44 is precisely known. Insofar, the measurement probe 10 as described herein allows a rather precise measurement of the entire surface 22 of the object 20 with respect or in relation to the reference surface 44 of the reference object 24.

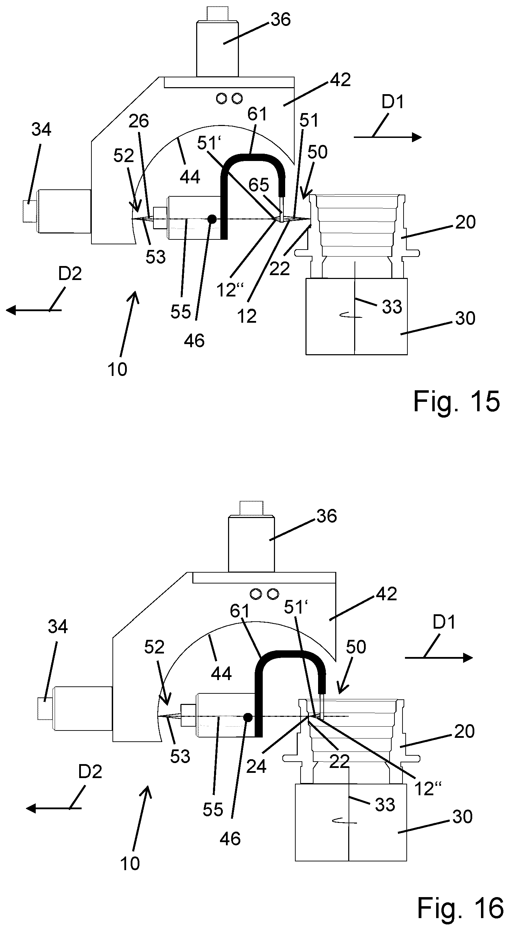

With the further example of a measurement probe 10 as illustrated in Figs. 15 and 16 the first distance sensor 50, which is likewise provided at a measurement tip 65 of the sensor mount 61, is configured to emit the first measurement beam 12 along the first direction D1, which is opposite to the second direction D2. The first distance sensor 50 is further configured to emit another first measurement beam 12" along the second direction D2.

In both situations as well as in both configurations as illustrated in Figs. 15, 16 respective first reflected measurement beam portions, which are reflected from the surface 22 can be captured by the first distance sensor 50.

The distal free end of the sensor mount 61 may be configured to direct a first partial measurement beam 12 along the first direction D1 and to direct a second partial measurement beam 12" along the second direction D2. The first distance sensor 50 may be configured to focus both partial measurement beams 12, 12" onto the surface 22 of the object 20. The focal lengths of the respective partial measurement beams 12, 12" may be identical or may differ from each other as illustrated in Fig. 15.

As shown in the example according to Fig. 16, the second partial measurement beam 12" can be directed radially inwardly with respect to the pivot axis 46 of the sensor mount 61 whereas the first partial measurement beam 12 is directed radially outwardly with respect to the pivot axis 46.

Directing the first partial measurement beam 12" radially inwardly comes along with the advantage, that the sensor mount 61 and/or its recess 60 does no longer define a size limit to the measurable diameter of the hollow structure of the object 20. By providing a radially inwardly directed measurement as shown in Fig. 16 there can be measured another first distance 51' to the inside surface 22 of the object substantially along the second direction D2.

Here, the radial extent of the recess 60 with respect to the pivot axis 46 must be only large enough to receive the sidewall 21 of the hollow structure of the object 20 but there will be no size limitation for measuring hollow objects with a comparatively large diameter.

### Reference Numbers

- 1: measurement device
- 2: light source
- 3: optical coupler
- 4: detector
- 5: signal analyzer
- 6: controller
- 7: optical fiber
- 8: processor
- 9: processor
- 10: measurement probe
- 11: optical beam
- 12: measurement beam
- 14: reference beam
- 15: distance
- 16: probe controller
- 20: object
- 21: object portion
- 22: surface
- 24: measurement point
- 26: measurement beam
- 27: measurement beam
- 28: measurement beam
- 30: mount
- 31: reference axis
- 32: measurement stage
- 33: axis of rotation
- 34: distance sensor
- 35: reference object
- 36: distance sensor
- 37: reference object
- 38: distance
- 39: distance
- 40: holder
- 42: reference body
- 44: reference surface
- 45: bearing
- 46: pivot axis
- 48: reference point
- 50: distance sensor
- 51: distance
- 52: distance sensor
- 53: distance
- 55: virtual line
- 56: distance sensor
- 57: distance
- 58: distance sensor
- 59: distance
- 60: recess
- 61: sensor mount
- 62: proximal portion
- 63: intermediate portion
- 64: distal portion
- 65: measurement tip
- 66: receptacle
- 67: fastener
- 68: insert opening
- 69: free end
- 70: sleeve
- 71: sidewall
- 72: ferrule
- 73: spacer
- 74: optical element
- 75: spacer
- 76: deflector
- 77: end section
- 78: end section

## Claims

1. A measurement probe (10) for measuring a distance between a measurement point (24) on a surface (22) of an object (20) and a reference point (48) on a reference surface (44) of a reference body (42), the measurement probe (10) comprising:
- a first distance sensor (50) configured to direct a first measurement beam (12) onto the measurement point (24) on the surface (22) of the object (20) along a first direction (D1) and configured to capture a first reflected measurement beam portion (12') reflected from the surface (22),
- a second distance sensor (52) configured to direct a second measurement beam (26) onto the reference point (48) on the reference surface (44) along a second direction (D2) and configured to capture a second reflected measurement beam portion (26') reflected from the reference surface (44),
- wherein the measurement point (24) and the reference point (48) define a first virtual line (55) crossing the measurement point (24) and the reference point (48),
- a sensor mount (61) to mutually fix the first distance sensor (50) and the second distance sensor (52),
- wherein the sensor mount (61) comprises a recess (60), which is traversed by the first virtual line (55).

2. The measurement probe (10) according to claim 1, wherein the recess (60) comprises an insert opening (68) configured to receive at least a portion (21) of the object (20) along an insert direction (ID), wherein the insert direction (ID) extends at a predefined angle relative to at least one of the first direction (D1) and the second direction (D2).

3. The measurement probe (10) according to any one of the preceding claims, wherein the sensor mount (61) comprises a proximal portion (62), an intermediate portion (63) and a distal portion (64), wherein the proximal portion (62) is fixed to the second distance sensor (52), wherein the distal portion (64) is fixed to the first distance sensor (50) and wherein the distal portion (64) is connected or fixed to the proximal portion (62) via the intermediate portion (63).

4. The measurement probe (10) according to claim 3, wherein the proximal portion (62) and the distal portion (64) of the sensor mount (61) extend substantially parallel with respect to each other or wherein the proximal portion (62) and the distal portion (64) extend at a predefined tilt angle (α) relative to each other.

5. The measurement probe (10) according to any one of the preceding claims 3 or 4, wherein the first distance sensor (50) is arranged at a free end (69) of the distal portion (64) of the sensor mount (61).

6. The measurement probe (10) according to any one of the preceding claims 3-5, wherein the first distance sensor (50) is configured to emit the first measurement beam (12) at a predefined emission angle (β) relative to a longitudinal extent of the distal portion (64) of the sensor mount (61).

7. The measurement probe (10) according to any one of the preceding claims, wherein the first distance sensor (50) comprises an elongated hollow sleeve (71), a ferrule (72) connected to an optical fiber (7) and arranged inside the hollow sleeve (71) and a deflector (76) fixed to the elongated hollow sleeve (71) to direct the first measurement beam (12), which is provided by the optical fiber (7), onto the first measurement point (12).

8. The measurement probe (10) according to any one of the preceding claims, further comprising a bearing (45) defining a pivot axis (46), wherein the sensor mount (61) is pivotable with respect to the pivot axis (46).

9. The measurement probe (10) according to any one of the preceding claims, further comprising:
- a third distance sensor (56) configured to direct a third measurement beam (27) onto another measurement point (24') on the surface (22) of the object (20) along a third direction (D3) and configured to capture a third reflected measurement beam portion (27') reflected from the surface (22),
- a fourth distance sensor (58) configured to direct a fourth measurement beam (28) onto another reference point (48') on the reference surface (44) along a fourth direction (D4) and configured to capture a fourth reflected measurement beam portion (28') reflected from the reference surface (44), and
- wherein the third direction (3) is opposite to the fourth direction (D4).

10. The measurement probe (10) according to claim 9, wherein the another measurement point (24') and the another reference point (48') define a second virtual line (55') intersecting the first virtual line (55).

11. The measurement probe (10) according to claims 8 and 10, wherein the first virtual line (55) intersects the second virtual line (55') in the pivot axis (46).

12. A measuring device (1) for measuring a surface (22) or profile of an object (20) the measuring device comprising:
- a light source (2) configured to generate and to emit a beam of light,
- a mount (30) to fix and/or to support the object (20), and
- a measurement probe (10) according to any one of the preceding claims, which is optically coupled to the light source (2) and which is movable relative to the mount (30).

13. The measuring device (1) according to claim 12, further comprising:
- a first detector (4) coupled to the first distance sensor (50),
- a second detector (4') coupled to the second distance sensor (52), and
- a signal analyzer (5) coupled to the first detector (4) and to the second detector (4') and being configured to determine or to derive the distance between the measurement point (24) on the surface (22) of the object (20) and the reference point (48) on the reference surface (44) of the reference body (42).

14. A method of measuring a distance between a measurement point (24) on a surface (22) of an object (20) and a reference point (48) on a reference surface (44) of a reference body (42), the method comprising the steps of:
- using a measurement probe (10) according to any one of the preceding claims 1-11,
- directing a first measurement beam (12) onto the measurement point (24) on the surface (22) of the object (20) along a first direction (D1) and capturing a first reflected measurement beam portion (12') reflected from the surface (22),
- directing a second measurement beam (26) onto the reference point (48) on the reference surface (44) along a second direction (D2) and capturing a second reflected measurement beam portion (26') reflected from the reference surface (44), and
- deriving the distance between the measurement point (24) on the surface (22) and the reference point (48) on the reference surface (44) on the basis of the first reflected measurement beam portion (12') and the second reflected measurement beam portion (26').

15. A computer program comprising computer readable instructions, which, when executed by a processor (8, 9) of a measuring device (1) according to any one of the preceding claims 12 or 13 cause the processor (8, 9) to carry out the steps of the method of claim 14.
